# EUROPÄISCHE PATENTSCHRIFT

(11) **EP 1 454 075 B1**
(45) Veröffentlichungstag und Bekanntmachung des Hinweises auf die Patenterteilung: **11.01.2006**
(21) Anmeldenummer: 02803778.6
(22) Anmeldetag: 19.11.2002
(51) Int. Cl.: F16D 35/02

(54) **ELEKTROMAGNETISCH ANGESTEUERTE FLÜSSIGKEITSREIBUNGSKUPPLUNG**
ELECTROMAGNETICALLY CONTROLLED FLUID FRICTION COUPLING
EMBRAYAGE A FRICTION HYDRAULIQUE A COMMANDE ELECTROMAGNETIQUE

(30) Priorität: 24.11.2001 DE 10157822
(43) Veröffentlichungstag der Anmeldung: 08.09.2004
(73) Patentinhaber: Behr GmbH & Co. KG, 70469 Stuttgart (DE)
(72) Erfinder: ANGERMAIER, Jörg, 75428 Illingen-Schützingen (DE)
(86) Internationale Anmeldenummer: PCT/EP2002/012927
(87) Internationale Veröffentlichungsnummer: WO 2003/046399

(56) Entgegenhaltungen:
- DE-A- 3 243 967
- US-A- 4 987 986
- US-A- 5 152 383
- US-A- 5 722 523

## Beschreibung

Die Erfindung bezieht sich auf eine Flüssigkeitsreibungskupplung nach dem Oberbegriff des Patentanspruches 1. Eine solche Kupplung ist aus US-A-4 987 986 bekannt.

Bei dieser bekannten Flüssigkeitsreibungskuplung wird ein Ventilhebel, der die Zirkulation eines viskosen Mediums durch die Kupplung kontrolliert, von einem Elektromagneten gesteuert, welcher drehbar auf der Rückseite der Kupplung, d. h. zur Seite des antreibenden Motors angeordnet ist. Der Ventilhebel befindet sich dagegen auf der Vorderseite der Kupplung, d. h. auf der dem Motor und dem Elektromagneten abgewandten Seite vor der Antriebsscheibe (Primärscheibe) der Kupplung. Der Magnetfluß von der Spule des Elektromagneten bis zum Ventilhebel, der eine Ankerplatte aufweist, erfolgt über speziell gestaltete Leitringe, die aus magnetisch leitfähigem Material bestehen und teilweise in den Grundkörper der Kupplung eingegossen sind. Nachteilig bei dieser Magnetflußführung ist, daß eine relativ große Anzahl von Teilen für die Magnetflußführung benötigt wird und daß die Kupplung insgesamt eine relativ große Bautiefe aufweist.

Aufgabe der vorliegenden Erfindung ist es, die Bautiefe der eingangs genannten Flüssigkeitsreibungskupplung zu verringern und den Magnetfluß zu verbessern, um damit auch den Energieaufwand für die Spule des Elektromagneten zu verringern.

Diese Aufgabe wird für die eingangs genannte Kupplung mit den Merkmalen des kennzeichnenden Teils des Patentanspruches 1 gelöst.

Durch die DE-A 32 43 967 wurde zwar bereits eine Flüssigkeitsreibungskupplung mit elektromagnetischer Steuerung eines Ventilhebels, der zwischen Primärscheibe und Elektromagnetspule angeordnet ist, bekannt - allerdings weist diese Kupplung bezüglich der Anordnung des Elektromagneten und der Magnetflußführung über sogenannte Polringe sowie der Lage von Vorratsraum und Arbeitsraum erhebliche Unterschiede auf, die unter Anderem zu einer relativ großen Bautiefe führen.

Gemäß einer vorteilhaften Weiterbildung der Erfindung ist der Vorratsraum zur Aufnahme des viskosen Fluids auf der Vorderseite der Antriebsscheibe angeordnet, während sich auf deren Rückseite ein Zwischenraum befindet, der in Fluidverbindung mit dem Arbeitsraum steht. Durch diese Gestaltung wird erreicht, daß das viskose Medium dem Arbeitsraum von radial innen nach radial außen, d. h. unter Fliehkraftwirkung und auf der Rückseite der Antriebsscheibe zugeführt wird. Damit ist eine einwandfreie Zuführung des viskosen Fluids zum Arbeitsraum und eine sichere Zuschaltung der Kupplung gewährleistet.

Nach einer weiteren vorteilhaften Ausgestaltung der Erfindung ist der Ventilhebel mit seiner Ankerplatte an der Antriebsscheibe befestigt, in welcher auch die Zulaufbohrung angeordnet ist. Hierdurch ergibt sich eine gedrungene Bauweise.

Weitere vorteilhafte Ausgestaltungen der Erfindung ergeben sich aus den Unteransprüchen.

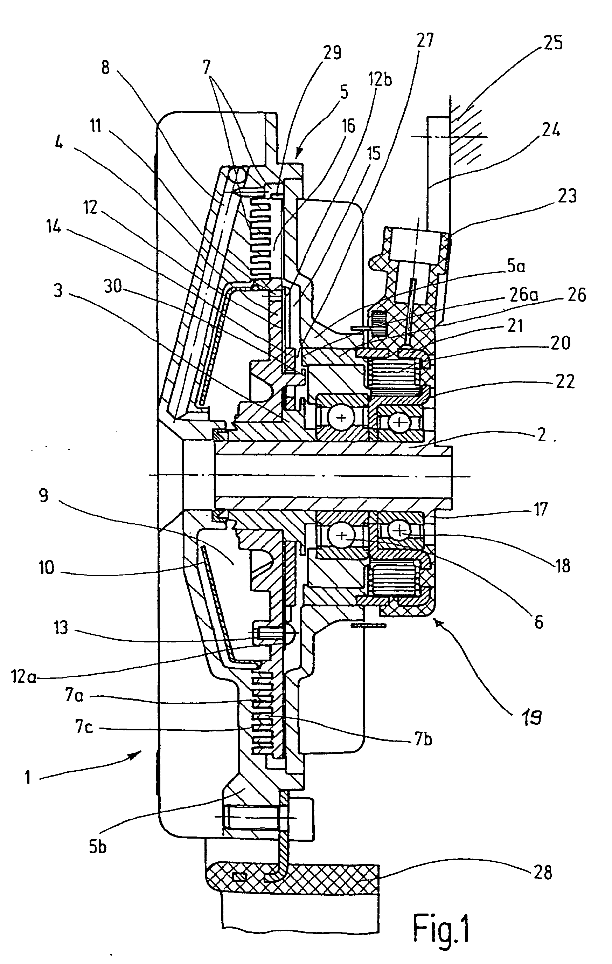

Ein Ausführungsbeispiel der Erfindung ist in der Zeichnung dargestellt und wird im Folgenden näher beschrieben. Es zeigt
**Fig. 1** eine Flüssigkeitsreibungskupplung im Schnitt.

**Fig. 1** (die einzige Figur) zeigt eine Flüssigkeitsreibungskupplung 1 in einer Schnittdarstellung. Die Kupplung 1 besteht aus einem Antriebsteil und einem Abtriebsteil, wobei der Antriebsteil durch eine als Hohlwelle 2 ausgebildete Antriebswelle, eine darauf befestigte Nabe 3 und eine auf der Nabe 3 befestigten Antriebsscheibe 4 gebildet wird. Der Abtriebsteil der Kupplung 1 besteht aus einem zweiteiligen Kupplungsgehäuse 5, welches aus einem Grundkörper 5a und einem Deckel 5b gebildet wird. Der Grundkörper 5a ist mittels eines Rillenkugellagers 6 auf der Hohlwelle 2 drehbar gelagert. Das Kupplungsgehäuse 5 bildet mit der Antriebsscheibe 4 einen Arbeitsraum bzw. Scherraum 7, welcher - wie an sich bekannt - durch Ringrippen 7a auf der Abtriebsseite 5b und Ringrippen 7b auf der Antriebsseite 4 gebildet wird. Die Ringrippen 7a und 7b bilden einen mäanderförmigen Labyrinthspalt 7c aus, in weichem sich Scherflüssigkeit, d. h. ein viskoses Medium, befindet. Vom Arbeitsraum 7 führt ein Rücklaufkanal 8 im Kupplungsdeckel 5b in einen Vorratsraum 9, der einerseits durch die Antriebsscheibe 4 und andererseits durch eine an ihr befestigte Zwischenscheibe 10 gebildet wird. Der Vorratsraum 9 rotiert somit mit der Antriebsscheibe 4. In der Antriebsscheibe 4 befindet sich radial innerhalb des Labyrinthspaltes 7c eine Zulaufbohrung 11, welche von der Vorderseite der Antriebsscheibe 4 auf deren Rückseite führt. Auf der Rückseite der Antriebsscheibe 4 ist ein Ventilhebel 12 angeordnet, der mit seinem (in der Zeichnung) unteren Ende 12a mittels eines Niets 13 an der Antriebsscheibe 4 befestigt ist. Auf dem Ventilhebel 12 ist eine Ankerplatte 14 befestigt. Der Ventilhebel 12 ist elastisch ausgebildet und liegt mit seiner Eigenspannung, insbesondere seinem (in der Zeichnung) oberen Ende 12b auf der Antriebsscheibe 4 im Bereich der Zulaufbohrung 11 auf und verschließt diese. Zwischen der Rückseite der Antriebsscheibe 4 und dem Grundkörper 5a befindet sich ein Zwischenraum 15, der über einen radial verlaufenden Kanal 16 in der Antriebsscheibe 4 in den Arbeitsraum 7 führt. Die Antriebsscheibe 4 weist - was in dieser Schnittdarstellung nicht erkennbar ist - mehrere gleichmäßig über den Umfang verteilte Kanäle 16 auf.

Unmittelbar neben dem Grundkörper 5a ist ortsfest und mittels eines Rillenkugellagers 18 eine Magnetbaugruppe 19 auf der Hohlwelle 2 gelagert und über einen Bund 17 auf der Hohlwelle 2 axial fixiert. Die Magnetbaugruppe 19 besteht aus einer Spule 20, die von einer radial äußeren Magnethülse 21 und einer radial inneren Magnethülse 22 umgeben ist. Die Stromzufuhr zu der Spule 20 erfolgt über ein in Kunststoff ausgebildetes Anschlußteil 23. Die gesamte Magnetbaugruppe 19 mit Anschlußteil 23 ist über eine schematisch dargestellte Drehmomentstütze 24 ortsfest abgestützt, z. B. am Motorgehäuse 25. Auf radialer Höhe der äußeren Magnethülse 21 ist im Grundkörper 5a, der aus einer Aluminiumlegierung besteht, ein Stahleinsatz 26 eingegossen, der die Funktion eines Leitringes für den Magnetfluß ausübt. Die aus dem Grundkörper 5a in den Zwischenraum 15 austretende Stirnseite 26a des Stahleinsatzes 26 liegt unmittelbar gegenüber der Ankerplatte 14 des Ventilhebels 12 - zwischen beiden befindet sich ein Spalt 27.

Die Kupplung 1 wird mittels eines durch die Hohlwelle 2 gesteckten - in der Zeichnung nicht dargestellten - Befestigungsbolzens mit der ebenfalls nicht dargestellten Antriebswelle eines Motors oder einer Kühlmittelpumpenwelle eines Verbrennungsmotors verbunden, wie dies z. B. in der DE-A 31 48 872 der Anmelderin genauer beschrieben und dargestellt ist. Am Gehäuse 5b der Kupplung 1 ist ein teilweise dargestellter Lüfter 28 befestigt, welcher der Förderung von Umgebungsluft durch einen nicht dargestellten Kühler für den Kühlmittelkreislauf eines Verbrennungsmotors eines Kraftfahrzeuges dient.

Bei Antrieb der Hohlwelle 2 und damit der Antriebsscheibe 4 wird das sich im Vorratsraum 9 befindliche viskose Fluid, ein Silikonöl, in Folge der Fliehkraft nach außen gedrückt und bildet im Vorratsraum 9 einen Flüssigkeitsring aus, der bei durch den Ventilhebel 12 verschlossener Zulaufbohrung 11 im Vorratsraum 9 gehalten wird. Es fließt also kein Silikonöl in den Arbeitsraum 7 zu. Statt dessen wird das im Arbeitsraum 7 befindliche Silikonöl über einen Staukörper 29 abgepumpt und über den Rücklaufkanal 8 in den Vorratsraum 9 gefördert. Die Kupplung schaltet damit ab, weil sich kein Silikonöl mehr im Labyrinthspalt 7c befindet und somit kein Drehmoment mehr übertragen wird. Soll die Kupplung, um den Lüfter 28 anzutreiben, zugeschaltet werden, so wird die Magnetspule 20 mit Strom beaufschlagt, so daß sich ein Magnetfluß über den Stahleinsatz 26 in Richtung auf die Ankerplatte 14 ausbildet und diese nach rechts anzieht. Dadurch wird der Ventilhebel 12 von der Zulaufbohrung 11 abgehoben, und das viskose Medium strömt nunmehr unter der Wirkung der Fliehkraft über den Zwischenraum 15 und den Kanal 16 in den Arbeitsraum 7 - die Kupplung wird somit zugeschaltet. Beim Anziehen der Ankerplatte 4 durch die Magnetspule 20 muß dafür Sorge getragen werden, daß sich die Stirnseite 26a des Stahleinsatzes 26 und die Ankerplatte 14 nicht berühren, da beide Teile mit unterschiedlicher Drehzahl umlaufen. Dies wird durch einen Anschlag 30 auf der Antriebsscheibe 4 oder auch auf der Kupplungsnabe 3 gewährleistet.

Wenn die Spule 20 unter Strom steht, bildet sich für den Magnetfluß ein etwa geschlossener Ring aus, der, bei der Magnetspule beginnend, über die äußere Magnethülse 21 und den Stahleinsatz 26 in die Ankerplatte 14 und von dort über einen Teilbereich der Nabe 3 und der Hohlwelle 2 zurück in die innere Magnethülse 22 verläuft. Hierdurch wird eine kurzbauende und effektive Magnetflußführung erreicht, so daß eine kleine Spule mit geringem Energieaufwand für die Betätigung des Ventilhebels ausreichend ist.

### Bezugszeichenliste

- 1: Flüssigkeitsreibungskupplung
- 2: Hohlwelle
- 3: Nabe
- 4: Antriebsscheibe
- 5: Abtriebsgehäuse
- 5a: Grundkörper
- 5b: Deckel
- 6: Rillenkugellager
- 7: Arbeitsraum
- 7a: Ringrippe, abtriebsseitig
- 7b: Ringrippe , antriebsseitig
- 7c: Labyrinthspalt
- 8: Rücklaufkanal
- 9: Vorratsraum
- 10: Zwischenscheibe
- 11: Zulaufbohrung
- 12: Ventilhebel
- 13: Niet
- 14: Ankerplatte
- 15: Zwischenraum
- 16: Zulaufkanal
- 17: Bund auf Hohlwelle
- 18: Rillenkugellager
- 19: Elektromagnetbaugruppe
- 20: Spule
- 21: Äußere Magnethülse
- 22: Innere Magnethülse
- 23: Anschlußteil
- 24: Drehmomentstütze
- 25: Motorblock
- 26: Stahleinsatz
- 26a: Stirnseite von Stahleinsatz
- 27: Spalt
- 28: Lüfter
- 29: Staukörper
- 30: Anschlag

## Patentansprüche

1. Flüssigkeitsreibungskupplung, bestehend aus einer Antriebswelle (2) und einer drehfest darauf angeordneten Antriebsscheibe (4) sowie aus einem Abtriebsgehäuse (5), welches drehbar auf der Antriebswelle (2) gelagert ist und mit der Antriebsscheibe (4) einen Arbeitsraum (7) und einen Vorratsraum (9) bildet, die über eine Zulaufbohrung (11) und einen Rücklaufkanal (8) in Fluidverbindung für ein viskoses Medium stehen, wobei die Zulaufbohrung (11) über einen Ventilhebel (12) mit Ankerplatte (14) mittels eines auf der Rückseite der Kupplung angeordneten Elektromagneten (19) kontrollierbar ist, wobei der Ventilhebel (12) zwischen der Antriebsscheibe (4) und dem Elektromagneten (19) und die Ankerplatte (14) im Magnetflußbereich des Elektromagneten (19, 20) angeordnet sind, **dadurch gekennzeichnet, daß** der Ventilhebel (12) an der Antriebsscheibe (4) befestigt ist.

2. Flüssigkeitsreibungskupplung nach Anspruch 1, **dadurch gekennzeichnet, daß** der Vorratsraum (9) zur Aufnahme des aus dem Arbeitsraum (7) zurückströmenden Fluids auf der vorderen Seite der Antriebsscheibe (4), daß in der Antriebsscheibe (4) die Zulaufbohrung (11) und daß auf der Rückseite der Antriebsscheibe (4) ein Zwischenraum (15) angeordnet sind, welcher mit dem Arbeitsraum (7) in Fluidverbindung steht.

3. Flüssigkeitsreibungskupplung nach Anspruch 2, **dadurch gekennzeichnet, daß** der Zwischenraum (15) über radiale Zuführkanäle (16) mit dem Arbeitsraum (7) in Verbindung steht.

4. Flüssigkeitsreibungskupplung nach Anspruch 1, **dadurch gekennzeichnet, daß** der Ventilhebel (12) mit seinem der Zulaufbohrung (11) diametral gegenüberliegenden Ende (12a) an der Antriebsscheibe (4) befestigt ist und mit Federspannung im Bereich der Zulaufbohrung (11) an der Antriebsscheibe (4) anliegt.

5. Flüssigkeitsreibungskupplung nach einem der vorhergehende Ansprüche, **dadurch gekennzeichnet, daß** die Antriebswelle als Hohlwelle (2) zur Aufnahme eines zentralen Befestigungsbolzens ausgebildet ist.

6. Flüssigkeitsreibungskupplung nach einem der vorhergehenden Ansprüche, **dadurch gekennzeichnet, daß** das Abtriebsgehäuse (5) einen Aluminium-Grundkörper (5a) mit eingegossenem Stahleinsatz (26, 26a) im Bereich des Magnetflusses des Elektromagneten (20) aufweist.

7. Flüssigkeitsreibungskupplung nach einem der vorhergehenden Ansprüche, **dadurch gekennzeichnet, daß** der Magnetfluß einen im Wesentlichen geschlossenen Ring ausbildet, in welchem eine den Elektromagneten (20) umgebende äußere Magnethülse 21, der Stahleinsatz (26), die Ankerplatte (14), ein Teilbereich einer Kupplungsnabe (3), der Hohlwelle (2) und eine innere Magnethülse (22) angeordnet sind.

## Revendications

1. Embrayage à friction hydraulique, comprenant un arbre d'entraînement (2) et un disque d'entraînement (4) disposé dessus de façon solidaire en rotation ainsi qu'un boîtier de sortie (5) qui est monté de façon rotative sur l'arbre d'entraînement (2) et forme avec le disque d'entraînement (4) un espace de travail (7) et un espace de réserve (9), qui sont en liaison fluidique pour un agent visqueux au moyen d'un alésage d'entrée (11) et d'un canal de retour (8), l'alésage d'entrée (11) pouvant être contrôlé au moyen d'un culbuteur (12) avec plaque d'ancrage (14) au moyen d'un électroaimant (19) disposé sur l'arrière du couplage, le culbuteur (12) étant disposé entre le disque d'entraînement (4) et l'électro-aimant (19) et la plaque d'ancrage (14) dans la zone du flux magnétique de l'électro-aimant (19,20), **caractérisé en ce que** le culbuteur (12) est fixé sur le disque d'entraînement (4).

2. Embrayage à friction hydraulique selon la revendication 1, **caractérisé en ce que** l'espace de réserve (9) pour le logement du fluide refluant de l'espace de travail (7) est disposé sur le coté avant du disque d'entraînement (4), **en ce que** l'alésage d'entrée (11) est disposé dans le disque d'entraînement (4) et **en ce qu'**un espace intermédiaire (15), qui est en liaison fluidique avec l'espace de travail (7), est disposé sur l'arrière du disque d'entraînement (4).

3. Embrayage à friction hydraulique selon la revendication 2, **caractérisé en ce que** l'espace intermédiaire (15) est en liaison avec l'espace de travail (7) au moyen de canaux d'alimentation (16) radiaux.

4. Embrayage à friction hydraulique selon la revendication 1, **caractérisé en ce** le culbuteur (12) est fixé par son extrémité (12a) diamétralement opposée à l'alésage d'entrée (11) sur le disque d'entraînement (4) et s'appuie avec la tension de ressort dans la zone de l'alésage d'entrée (11) sur le disque d'entraînement (4).

5. Embrayage à friction hydraulique selon l'une quelconque des revendications précédentes, **caractérisé en ce que** l'arbre d'entraînement est formé comme arbre creux (2) pour le logement d'un boulon de fixation central.

6. Embrayage à friction hydraulique selon l'une quelconque des revendications précédentes, **caractérisé en ce que** le boîtier de sortie (5) présente un corps de base en aluminium (5a) avec insertion en acier (26, 26a) coulée dans la zone du flux magnétique de l'électro-aimant (20).

7. Embrayage à friction hydraulique selon l'une quelconque des revendications précédentes, **caractérisé en ce que** le flux magnétique forme une bague sensiblement fermée, dans laquelle sont disposés une manche magnétique (21) extérieure entourant l'électro-aimant (20), l'insertion en acier (26), la plaque d'ancrage (14), une zone partielle d'un moyeu d'accouplement (3), de l'arbre creux (2) et une douille magnétique (22) intérieure.

## Claims

1. Viscous friction clutch, comprising a drive shaft (2) and a driving disk (4) non-rotatably mounted thereon, and a drive housing (5) rotatably mounted on the drive shaft (2) and forming, together with the drive shaft (2), an operating chamber (7) and a reservoir chamber (9), which are fluid-connected for a viscous medium via an inlet bore (11) and a return passage (8), the inlet bore (11) being controlled via a valve arm (12) with armature plate (14) by a solenoid (19) located at the rear of the clutch, the valve arm (12) being located between the driving disk (4) and the solenoid (19) and the armature plate (14) being located in the magnetic flux range of the solenoid (19, 20), **characterised in that** the valve arm (12) is attached to the driving disk (4).

2. Viscous friction clutch according to claim 1, **characterised in that** the reservoir chamber (9) for holding the fluid returning from the operating chamber (7) is located at the front of the driving disk (4), **in that** the inlet bore (11) is located in the driving disk (4), and **in that** there is a gap (15) in fluid-connection with the operating chamber (7) at the rear of the driving disk (4).

3. Viscous friction clutch according to claim 2, **characterised in that** the gap (15) is connected to the operating chamber (7) by radial supply passages (16).

4. Viscous friction clutch according to claim 1, **characterised in that** the valve arm (12) is attached to the driving disk (4) at the end (12a) diametrically opposite the inlet bore (11) and bears against the driving disk (4) in the area of the inlet bore (11) under spring force.

5. Viscous friction clutch according to any of the preceding claims, **characterised in that** the drive shaft is designed as a hollow shaft (2) suitable for accommodating a central mounting bolt.

6. Viscous friction clutch according to any of the preceding claims, **characterised in that** the drive housing (5) incorporates an aluminium base body (5a) with a cast-in steel insert (26, 26a) in the magnetic flux range of the solenoid (20).

7. Viscous friction clutch according to any of the preceding claims, **characterised in that** the magnetic flux forms an essentially closed ring, wherein an outer magnetic sleeve (21) surrounding the solenoid (20), the steel insert (26), the armature plate (14), a part-section of a clutch hub (3), the hollow shaft (21) and an inner magnetic sleeve (22) are located.
